# EUROPEAN PATENT SPECIFICATION

(11) **EP 3 664 507 B1**
(45) Date of publication and mention of the grant of the patent: **24.04.2024**
(21) Application number: 18843025.0
(22) Date of filing: 09.08.2018
(51) Int. Cl.: H04L 5/00, H04W 36/00, H04W 76/12

(54) **COMMUNICATION METHODS FOR A MASTER BASE STATION AND A TERMINAL**
KOMMUNIKATIONSVERFAHREN FÜR EINE MASTERBASISSTATION UND EINE ENDGERÄTEVORRICHTUNG
PROCÉDÉS DE COMMUNICATION POUR UNE STATION DE BASE MASTERE ET POUR UN DISPOSITIF TERMINAL

(30) Priority: 11.08.2017 CN 201710687958
(43) Date of publication of application: 10.06.2020
(73) Proprietor: Huawei Technologies Co., Ltd., Longgang District Shenzhen, Guangdong 518129 (CN)
(72) Inventor: HAN, Feng, Shenzhen Guangdong 518129 (CN); JIN, Yinghao, Shenzhen Guangdong 518129 (CN); TAN, Wei, Shenzhen Guangdong 518129 (CN); LI, Hong, Shenzhen Guangdong 518129 (CN)
(74) Representative: Körber, Martin Hans
(86) International application number: PCT/CN2018/099711
(87) International publication number: WO 2019/029642

(56) References cited:
- EP-A1- 2 836 012
- EP-A1- 3 096 559
- CN-A- 104 822 169
- CN-A- 106 559 847
- CN-A- 107 005 899
- US-A1- 2016 029 235
- US-A1- 2017 134 998

## Description

### TECHNICAL FIELD

This application relates to the communications field, and more specifically, to two communication methods: one for a master base station and one for a terminal respectively.

### BACKGROUND

With comprehensive development and gradual deepening of researches on a next-generation communications system, the industry has reached a basic consensus on specific content of researches on a 5G communications system. 5G will support various network deployments and application types, including: higher-rate experience and a larger-bandwidth access capability, for example, enhanced mobile broadband (enhanced mobile broadband, eMBB); access and management of larger-scale and lower-cost machine type devices, such as massive machine type communications (massive machine type communication, mMTC); information exchange of lower latency and higher reliability, such as ultra-reliable low-latency communication (ultra reliable and low latency communication, URLLC). To meet the foregoing requirements, 5G defines a quality of service (quality of service, QoS) flow (flow)-based framework.

How to operate and manage a communications network based on a QoS flow-based framework is an urgent problem that needs to be resolved in the industry.

EP 3 096 559 A1 discloses a path switch method for dual connectivity in a wireless communication system.

EP 2 836 012 A1 discloses a method and a system for setup or modification of data flows.

### SUMMARY

This application provides communication methods to improve communication efficiency. The present invention is defined by the independent claims. Additional features of the invention are provided in the dependent claims.

### BRIEF DESCRIPTION OF DRAWINGS

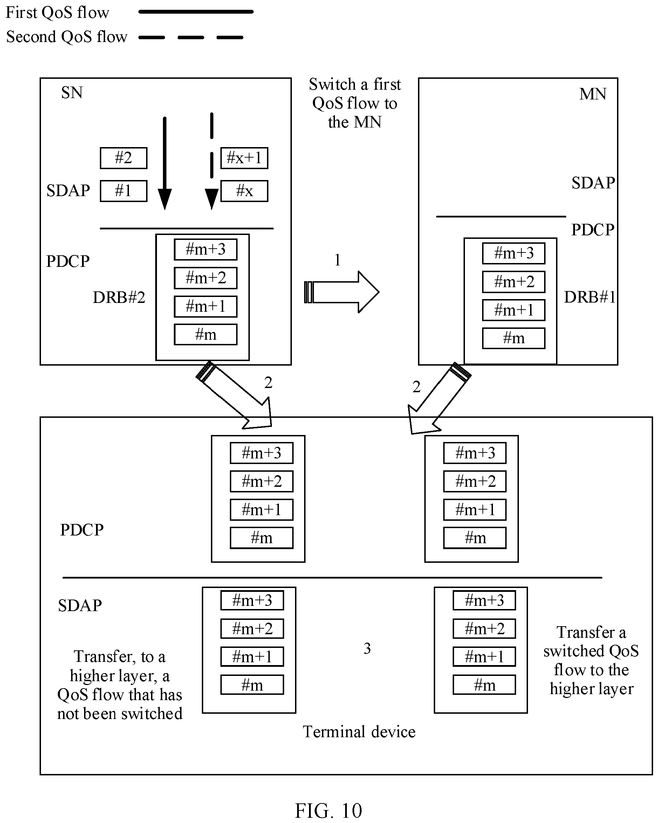

FIG. 1 is a schematic diagram of a network architecture according to an embodiment of this application;
FIG. 2 is a schematic architecture diagram of a dual connectivity scenario according to an embodiment of this application;
FIG. 3 to FIG. 5 are schematic diagrams of a QoS flow switching solution according to another embodiment of this application;
FIG. 6 is a schematic diagram of a communication method according to an embodiment of this application;
FIG. 7 is a schematic diagram of data switching according to an embodiment of this application;
FIG. 8 is a schematic diagram of data switching according to another embodiment of this application;

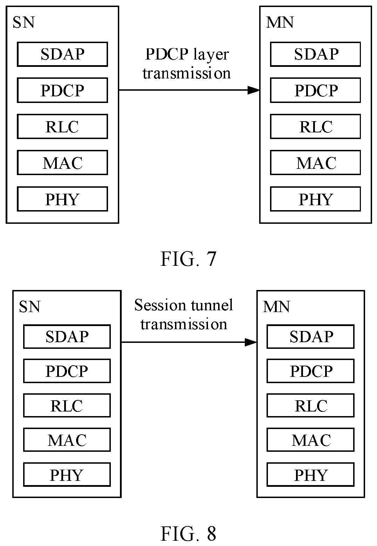

FIG. 7 is a schematic diagram of data switching according to an embodiment of this application;
FIG. 8 is a schematic diagram of data switching according to another embodiment of this application;

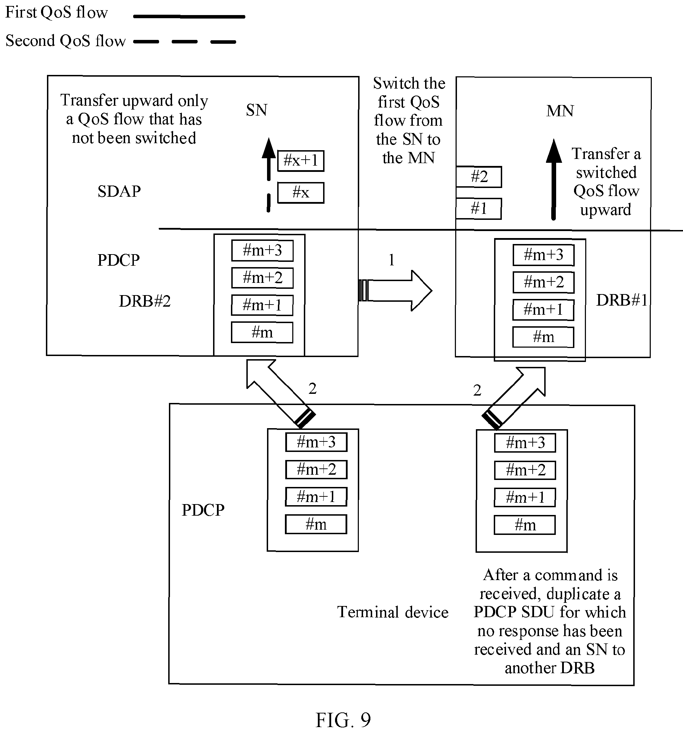

FIG. 9 is a schematic flowchart of data switching in a UL process;
[0149] FIG. 10 is a schematic flowchart of data switching in a DL process;

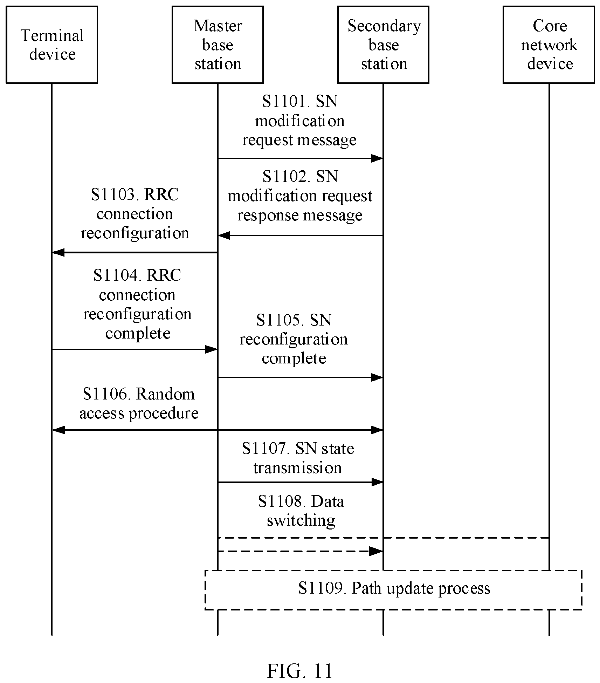

FIG. 11 is a schematic diagram of a communication method according to another embodiment of this application;

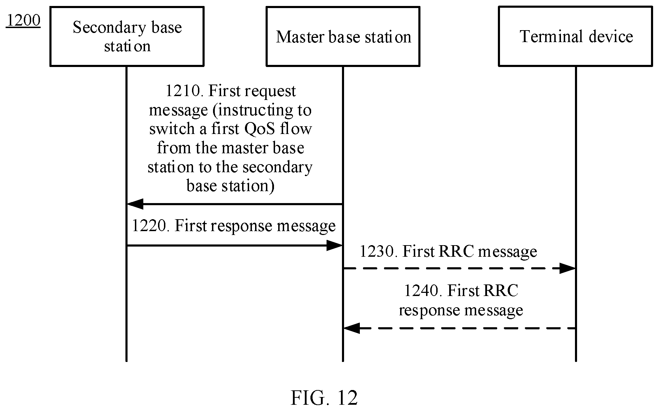

FIG. 12 is a schematic diagram of a communication method according to another embodiment of this application;

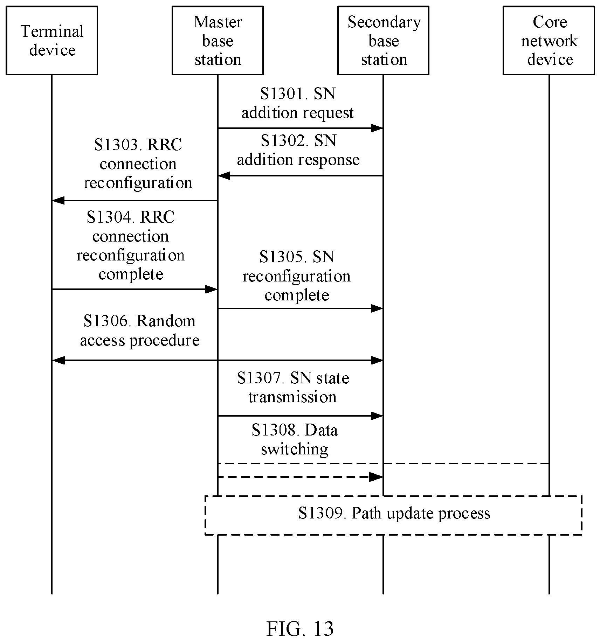

FIG. 13 is a schematic diagram of a communication method according to another embodiment of this application;

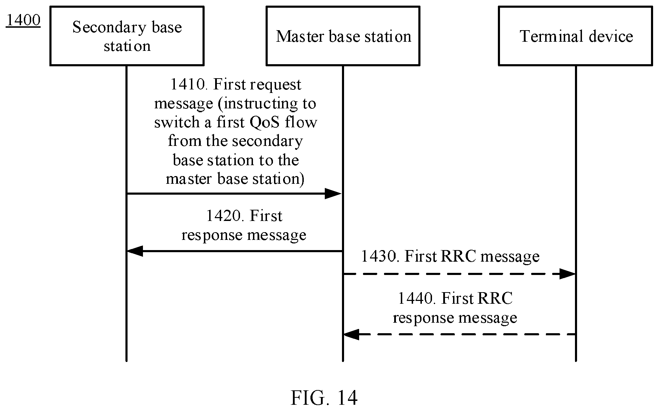

FIG. 14 is a schematic diagram of a communication method according to another embodiment of this application;

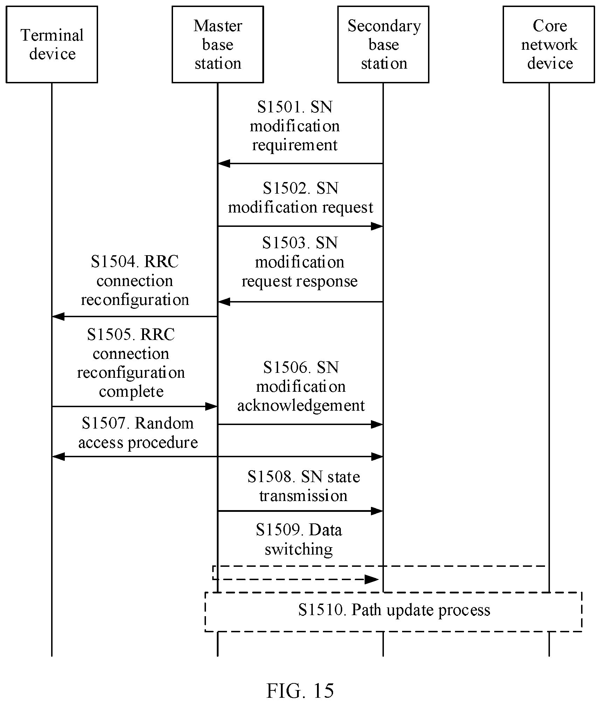

FIG. 15 is a schematic diagram of a communication method according to another embodiment of this application;

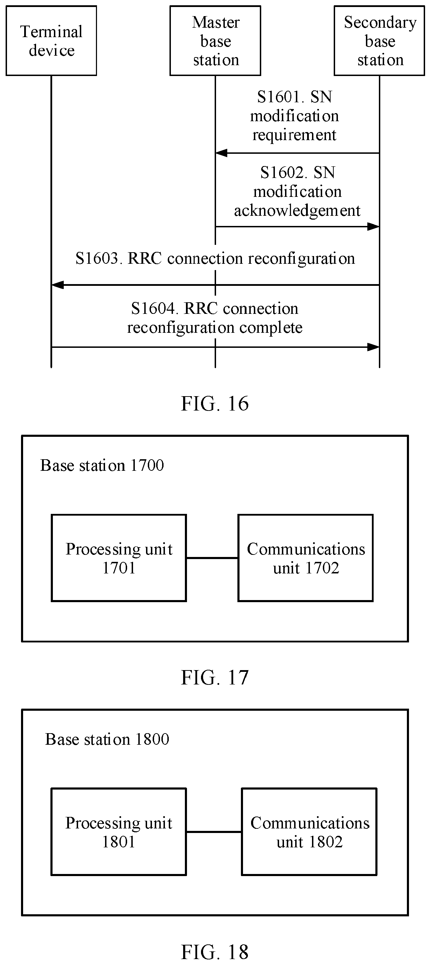

FIG. 16 is a schematic diagram of a communication method according to another embodiment of this application;
FIG. 17 is a schematic diagram of a base station according to an embodiment of this application;
FIG. 18 is a schematic diagram of a base station according to another embodiment of this application;

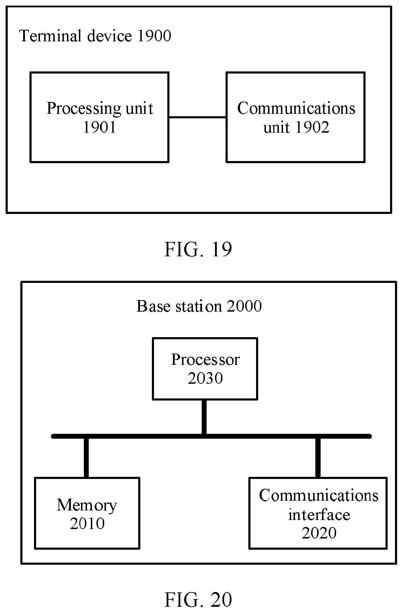

FIG. 19 is a schematic diagram of a terminal device according to another embodiment of this application;
FIG. 20 is a schematic diagram of a base station according to another embodiment of this application;

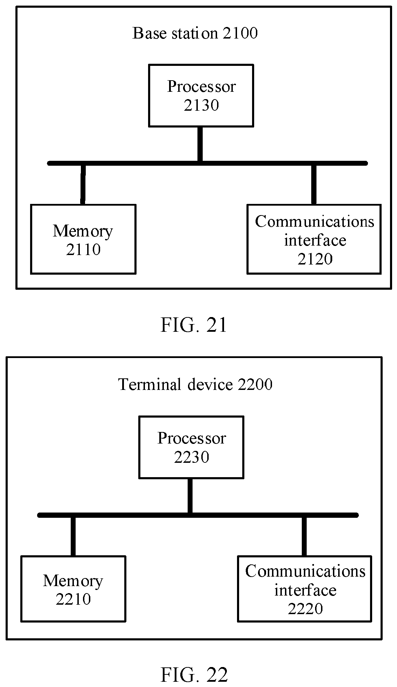

FIG. 21 is a schematic diagram of a base station according to another embodiment of this application; and
FIG. 22 is a schematic diagram of a terminal device according to another embodiment of this application.

### DESCRIPTION OF EMBODIMENTS

The following describes the technical solutions of this application with reference to the accompanying drawings.

The technical solutions of the embodiments of this application may be applied to various communications systems, such as a global system for mobile communications (Global System of Mobile Communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunication System, UMTS), a worldwide interoperability for microwave access (Worldwide Interoperability for Microwave Access, WiMAX) communications system, a future 5^{th} generation (5th Generation, 5G) system, or a new radio (New Radio, NR) system.

A terminal device in the embodiments of this application may also be referred to as user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may also be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, a terminal device in a future evolved public land mobile network (Public Land Mobile Network, PLMN), or the like. This is not limited in the embodiments of this application.

A base station in the embodiments of this application may be a device configured to communicate with the terminal device, and the base station may be a base transceiver station (Base Transceiver Station, BTS) in a global system for mobile communications (Global System of Mobile communication, GSM) system or a Code Division Multiple Access (Code Division Multiple Access, CDMA) system, a NodeB (NodeB, NB) in a wideband code division multiple access (Wideband Code Division Multiple Access, WCDMA) system, an evolved NodeB (Evolutional NodeB, eNB or eNodeB) in an LTE system, a radio controller in a cloud radio access network (Cloud Radio Access Network, CRAN) scenario, or the like. This is not limited in the embodiments of this application.

As described above, 5G will support various network deployments and application types. To meet the foregoing requirements, 5G defines a quality of service (quality of service, QoS) flow (flow)-based framework. The framework can support a QoS flow whose flow rate is guaranteed or a QoS flow whose flow rate is not guaranteed.

The following briefly describes a QoS flow-based architecture in the embodiments of this application.

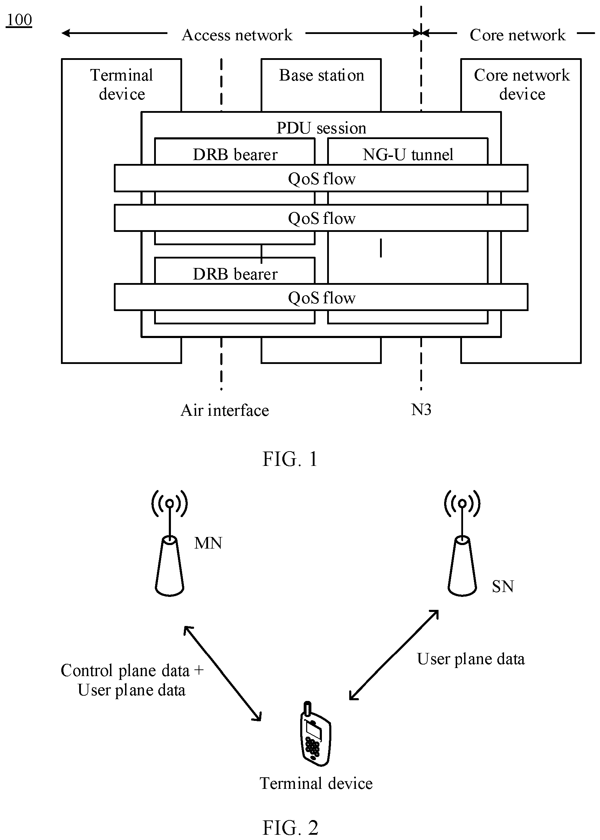

FIG. 1 is a schematic diagram of a possible network architecture 100 according to an embodiment of this application. The network architecture 100 is a possible implementation form of the QoS flow-based architecture. As shown in FIG. 1, a terminal device may set up one or more sessions with a core network (core network, CN). A base station may map data packets belonging to different sessions onto different bearers, and map packets belonging to a same session onto one or more bearers. A QoS flow is a minimum granularity for implementing QoS differentiation in the foregoing session. Optionally, a corresponding QoS flow identifier (QoS flow identifier, QFI) may be allocated to each QoS flow, and one QFI may be used to indicate one QoS flow. Services with a same QFI in a same session will accept a same scheduling policy or same admission control. When a data packet is transmitted through a communications interface between the core network and the base station, a QFI may be carried in an encapsulation header of the data packet. As shown in FIG. 1, the communications interface between the core network and the base station may be an N3 interface, or the communications interface between the core network and the base station may be referred to as a next-generation user plane (Next-generation user plane, NG-U) tunnel.

It should be noted that the session may be a packet data unit (packet data unit, PDU) session, and the bearer may be a data resource bearer (data resource bearer, DRB). The PDU session may be a connection established between the terminal device and a data network, and a type of the connection may be an internet protocol (internet protocol, IP) connection, an ethernet connection, or another type. In some embodiments, the method or the apparatus in this application is described by using an example in which the session is a PDU session and the bearer is a DRB. In addition, the core network may include a core network device. For example, the core network device may include a user plane function (user plane function, UPF) entity, an access and mobility management function (Access and Mobility Management function, AMF), and a session management function (Session Management function, SMF).

Based on the DRB, 5G defines a data packet processing mechanism on an air interface. In air interface transmission, a same packet processing mechanism is used for data packets served by one DRB. The base station may set up a plurality of DRBs with the terminal device, to meet QoS flows having different packet processing requirements. It should be noted that one DRB may have a mapping relationship with one QoS flow, or may have a mapping relationship with a plurality of QoS flows. Specifically, for downlink data transmission (down load, DL), the base station may map, based on a QFI identifier and a QoS rule (profile) corresponding to the QFI, a downlink data packet corresponding to a QoS flow onto a corresponding DRB, and perform downlink transmission. Corresponding to uplink data transmission (up load, UL), the terminal device maps, based on a mapping relationship that is from a QoS flow to a DRB and that is configured by the base station, an uplink data packet corresponding to the QoS flow onto the corresponding DRB, and performs uplink transmission.

For ease of understanding, parameters of a QoS flow are further described below. In the embodiments of this application, a parameter of a QoS flow may also be referred to as a configuration parameter of the QoS flow.

Specifically, each QoS flow includes at least the following parameters: a 5G QoS identifier (5G QoS Identifier, SQI), and an allocation and retention priority (an allocation and retention priority, ARP) parameter. For example, the ARP parameter may include at least one of the following information:
a priority level (priority level) parameter: used to determine, when resources are limited, whether the QoS flow can be accepted or rejected. In a typical scenario, the priority level parameter may be applied to a guaranteed bit rate (guaranteed flow bit rate, GBR) QoS flow.
a preemption capability (the pre-emption capability) parameter: used to determine whether the QoS flow can preempt a resource that is for another QoS flow having a lower priority; and
a preemption vulnerability (the pre-emption vulnerability) parameter: used to determine whether a resource of the QoS flow can be preempted by another QoS flow with a higher priority.

In the network architecture 100, data transmission may be scheduled or managed based on a QoS flow-based framework. In other words, in the network architecture 100, admission control management based on a QoS flow granularity may be performed. The admission control management means that a target base station determines whether to admit a QoS flow that a source base station requests to switch. When resources are sufficient, a newly added QoS flow does not affect normal transmission of another QoS flow. When resources are limited, whether to admit service transmission mapped to a newly added QoS flow is determined depending on an allocation and retention priority parameter.

After a QoS flow-based architecture is introduced into a communications system, how to implement efficient data transmission management or scheduling in the QoS flow granularity-based architecture is an urgent problem that needs to be resolved in the industry. In view of this, the embodiments of this application mainly focus on how to implement QoS flow granularity-based switching between base stations in a dual connectivity scenario.

FIG. 2 is a schematic architecture diagram of a dual connectivity scenario according to an embodiment of this application. As shown in FIG. 2, the dual connectivity scenario may usually include a master node (master node, MN) and a secondary node (secondary node, SN). The master node or the secondary node may also be referred to as a master base station and a secondary base station respectively. In the dual connectivity scenario, the master base station and the secondary base station may jointly serve a terminal device. In other words, for one session set up between a terminal device and a core network, data may be transmitted simultaneously between the master base station and the terminal device and between the secondary base station and the terminal device. As shown in FIG. 2, in a possible scenario, the master base station may be responsible for a control plane signaling procedure and user plane data transmission between the master base station and the terminal device, and the secondary base station needs to be responsible for only user plane data transmission between the secondary base station and the terminal device. To be specific, the master base station may set up a data resource bearer (data resource bearer, DRB) and a signaling resource bearer (signal resource bearer, SRB) with the terminal device, and the secondary base station needs to set up only a DRB with the terminal device. Alternatively, in another possible scenario, both the master base station and the secondary base station may be responsible for control plane transmission and user plane data transmission with the terminal device. To be specific, the master base station may set up a DRB and an SRB with the terminal device, and the secondary base station may also set up a DRB and an SRB with the terminal device. Generally, the dual connectivity scenario may include one master base station and at least one secondary base station. The following uses a case in which the dual connectivity scenario includes one master base station and one secondary base station as an example for description.

For example, in the dual connectivity scenario, in some embodiments, both the master base station and the secondary base station may be NR base stations. In some other embodiments, the master base station may be an LTE base station, and the secondary base station may be an NR base station. In still some embodiments, the master base station may be an NR base station, and the secondary base station may be an LTE base station.

Generally, a base station in the dual connectivity scenario may support a plurality of bearer types. For example, the bearer types may include at least one of the following: a master cell group (Master Cell Group, MCG) bearer, an MCG split bearer, a secondary cell group (Secondary cell group, SCG) bearer, and an SCG split bearer.

In the dual connectivity scenario, QoS flows belonging to a same PDU session may be mapped onto different bearer types. For example, if one PDU session includes two QoS flows, one QoS flow may be mapped onto an MCG bearer, and the other QoS flow may be mapped onto an SCG bearer.

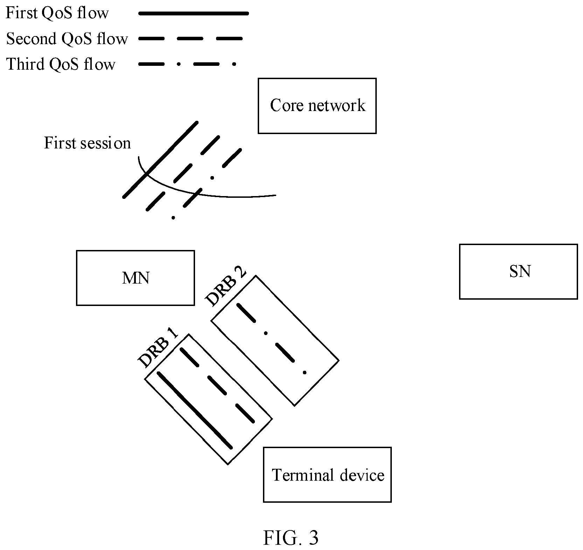

With reference to FIG. 3 to FIG. 5, the following describes a QoS flow switching solution in a dual connectivity scenario. FIG. 3 to FIG. 5 show the QoS flow switching solution by using an example in which a QoS flow of a master base station is switched to a secondary base station. It should be understood that the solution in FIG. 3 to FIG. 5 is applicable to a scenario in which a QoS flow of a secondary base station is switched to a master base station. The QoS flow switching in the dual connectivity scenario may mean that the master base station switches some QoS flows in one session to the secondary base station, or the secondary base station switches some QoS flows in one session to the master base station.

FIG. 3 is a schematic diagram of a scenario before a master base station switches a QoS flow to a secondary base station. As shown in FIG. 3, a first PDU session is set up between a terminal device and a core network. The first PDU session includes a first QoS flow, a second QoS flow, and a third QoS flow. In FIG. 3, all the three QoS flows are transmitted from the master base station to the terminal device. Optionally, the three QoS flows may be mapped onto a same DRB, or may be mapped onto different DRBs. For example, in FIG. 3, the first QoS flow and the second QoS flow are mapped onto a first DRB (DRB 1), and the third QoS flow is mapped onto a second DRB (DRB 2).

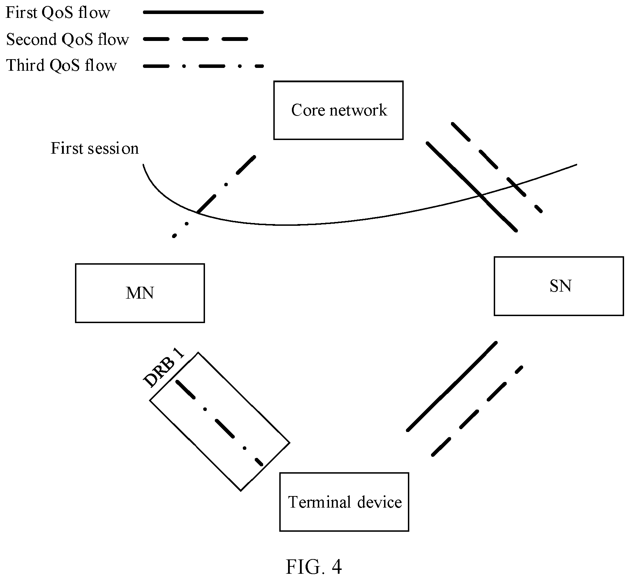

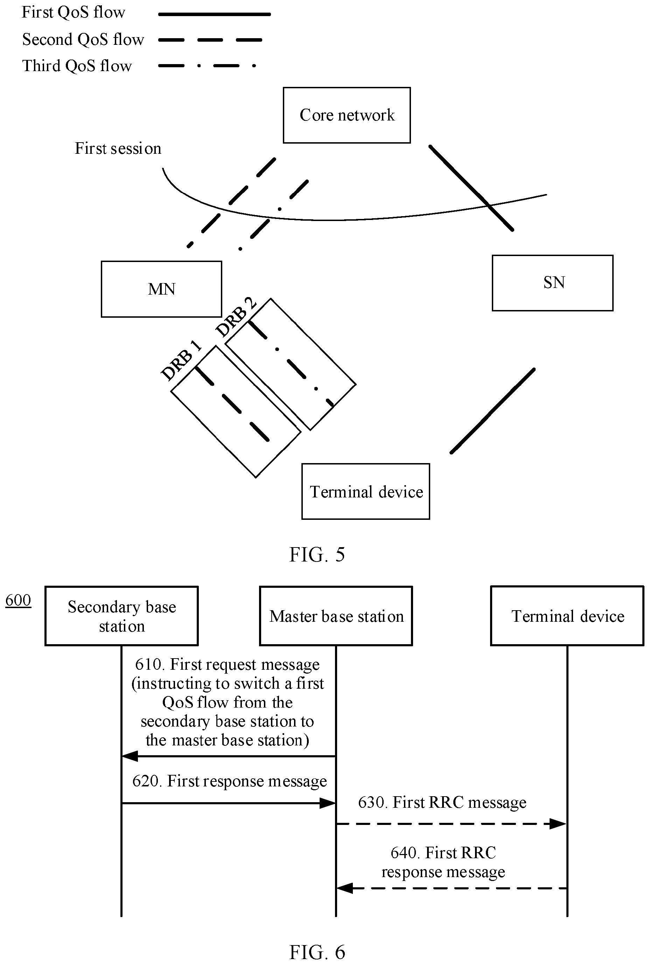

The embodiments of this application mainly provide two types of QoS flow switching solutions. A first type is QoS flow switching based on a bearer granularity. A second type is QoS flow switching based on a QoS flow granularity. FIG. 4 is a schematic scenario diagram of QoS flow switching based on a bearer granularity. FIG. 5 is a schematic scenario diagram of QoS flow switching based on a QoS flow granularity.

For example, as shown in FIG. 4, the master base station implements QoS flow switching by using a bearer as a minimum switching unit. That is, the master base station switches all QoS flows mapped onto one DRB to the secondary base station, or vice versa. For example, the master base station switches both a first QoS flow and a second QoS flow that are on a first DRB to the secondary base station.

For example, as shown in FIG. 5, the master base station may perform QoS flow switching based on a QoS flow granularity. That is, the master base station may switch all or some QoS flows on a DRB to the secondary base station, or vice versa. For example, the master base station may switch a first QoS flow on a first DRB to the secondary base station, and does not need to switch a second QoS flow on the first DRB to the secondary base station. Therefore, load balancing at a finer granularity can be implemented.

The following describes a communication method in the embodiments of this application with reference to FIG. 6 to FIG. 16. FIG. 6 to FIG. 11 show a communication process in which a QoS flow is switched from a secondary base station to a master base station. FIG. 12 and FIG. 13 show a communication process in which a QoS flow is switched from a master base station to a secondary base station. FIG. 14 and FIG. 15 show a communication process in which a QoS flow is switched from a secondary base station to a master base station. In FIG. 6 and FIG. 11, the master base station determines to switch a QoS flow of the secondary base station to the master base station. In FIG. 12 and FIG. 13, the master base station determines to switch a QoS flow of the master base station to the secondary base station. In FIG. 14 and FIG. 15, the secondary base station determines to switch a QoS flow of the secondary base station to the master base station.

In FIG. 6 to FIG. 11, an example in which a QoS flow is switched from the secondary base station to the master base station is further used to describe a data switching (data forwarding) process in the QoS flow switching process. A person skilled in the art can understand that the solutions described in FIG. 6 to FIG. 11 is also applicable to a scenario in which a QoS flow is switched from the master base station to the secondary base station. For example, the foregoing data forwarding solution is also applicable to a scenario described in any one of the examples in FIG. 12 to FIG. 15.

FIG. 6 is a schematic diagram of a communication method 600 according to an embodiment of this application. The method in FIG. 6 may be applied to the network architecture 100 in FIG. 1. As shown in FIG. 6, the method 600 may include step 610 to step 640. The following describes the steps in FIG. 6 in detail.

In step 610, a master base station sends a first request message to a secondary base station, and correspondingly, the secondary base station receives the first request message from a target base station. The first request message is used to instruct to switch a first QoS flow of a first session from the secondary base station to the master base station, and the first session is a session corresponding to a terminal device.

It should be understood that the first session may be a session set up between the terminal device and a core network. The first session may be initiated or set up by the terminal device, or may be initiated and set up by the core network. This is not limited in this embodiment of this application.

In some embodiments, the first request message may be a secondary node (secondary node, SN) addition request message, or the first request message may be a secondary node (secondary node, SN) modification request message. Concepts of the secondary node and the secondary base station may be interchanged.

It should be further understood that at least one session may be set up between the terminal device and the core network. Each of the at least one session may be corresponding to at least one bearer, and the bearer may be a bearer set up between the terminal device and a base station. For example, the bearer may be a DRB. Before QoS flow switching, one or more DRBs may be set up between the master base station and the terminal device. There may be a connection between the secondary base station and the terminal device, or there may be no connection between the secondary base station and the terminal device. For example, if there is no connection between the secondary base station and the terminal device, the first request message may be an SN addition request message, to request to add the secondary base station. If there is a connection between the secondary base station and the terminal device, the first request message may be an SN modification request message, to instruct to modify a DRB corresponding to the secondary base station. Each of the at least one bearer may have a mapping relationship with at least one QoS flow. In other words, one bearer may be used to transmit a data packet or data packets corresponding to one or more QoS flows.

It should be noted that the first QoS flow of the first session may be information about all or some QoS flows in the first session.

Optionally, the first request message may include an ID of a QoS flow that requires to be switched. If there are a plurality of QoS flows to-be-switched, the first request message may carry a list of first QoS flows that require to be switched. For example, the first request message may carry information shown in Table 1. The information shown in Table 1 may be an information element (information element, IE), or may be an indicator or information in another format.

**Table 1**

| |
|---|
| >QoS flow ID |

The method 600 further includes: sending, by the master base station, first information to the terminal device, and correspondingly, receiving, by the terminal device, the first information from the master base station, where the first information is used to instruct the terminal device to set up, with the master base station, a first bearer corresponding to the first session, a QoS flow corresponding to the first bearer includes the first QoS flow, and the first information includes a configuration parameter of the first bearer.

In some embodiments, the first information may be carried in a first RRC message in S240.

In some other embodiments, the first information and the first RRC message may be separately sent.

For example, the configuration parameter of the first bearer includes at least one of the following: a mapping relationship between the first bearer and the QoS flow, and a parameter of the QoS flow included by the first bearer. The mapping relationship between the first bearer and the QoS flow may be indicated by using an identifier of the QoS flow included by the first bearer.

In step 620, the secondary base station sends a first response message to the master base station, and correspondingly, the master base station receives the first response message from the secondary base station. The first response message is used to respond to the first request message.

In some embodiments, the first response message may be an SN addition request response message or an SN modification request response message.

The configuration parameters of the first bearer and a configuration parameter of a second bearer are the same. The second bearer is a bearer that is between the terminal device and the secondary base station and that is in the first session, and a QoS flow corresponding to the second bearer includes the first QoS flow.

In this embodiment of this application, in a dual connectivity scenario, the master base station sends the first request message to the secondary base station, to instruct to switch the first QoS flow of the first session from the secondary base station to the master base station, where the first session is a session corresponding to the terminal device. In this way, QoS flow granularity-based switching can be implemented in the dual connectivity scenario, thereby improving communication efficiency.

In this embodiment of this application, in the dual connectivity scenario, the master base station instructs, by using a switching request message, the secondary base station to switch the first QoS flow based on a QoS flow granularity, thereby implementing quality of service management at a smaller granularity in a QoS flow switching process, and improving communication efficiency.

When the configuration parameter of the first bearer is the same as the configuration parameter of the second bearer, the method 600 further includes: receiving, by the master base station, second information from the secondary base station, and correspondingly, receiving, by the secondary base station, the second information from the master base station, where the second information includes the configuration parameter of the second bearer; and determining, by the master base station, the first information based on the second information.

Specifically, to help the master base station set up a bearer that is the same as the second bearer, the secondary base station sends the configuration parameter of the second bearer to the master base station. The configuration parameter of the second bearer includes at least one of the following: a mapping relationship between the second bearer and the QoS flow, and a parameter of the QoS flow included by the second bearer. The mapping relationship between the second bearer and the QoS flow may be indicated by using an identifier of the QoS flow included by the second bearer.

In this embodiment of this application, the QoS flow included by the first bearer or the second bearer may also be understood as a QoS flow carried on the first bearer or the second bearer, or may be understood as a QoS flow corresponding to the first bearer or the second bearer.

The master base station determines, based on the mapping relationship between the second bearer and the QoS flow, the QoS flow included by the second bearer and the parameter of the QoS flow included by the second bearer, to set up the first bearer between the master base station and the terminal device.

In some embodiments, the second information may be carried in the first response message.

In some other embodiments, the second information and the first response message may be separately sent.

For example, Table 2 shows a possible implementation solution of the second information. A format of the second information is not limited in this embodiment of this application. For example, the second information may be an information element (information element, IE), or may be an indicator. As shown in Table 2, the second information may include an identifier of the switched first QoS flow. Further, the first information further includes a parameter of the QoS flow.

**Table 2**

| Switched bearer ID (switched bearer ID) |
|---|
| >Included list of QoS flows |
| >>QoS flow ID |

Optionally, the method 600 further includes step 230 and step 240.

In step 630, the master base station sends a first RRC message to the terminal device, and correspondingly, the terminal device receives the first RRC message from the master base station, where the first RRC message is used to indicate that the first QoS flow of the first session is switched from the secondary base station to the master base station.

In some embodiments, the first RRC message may be an RRC connection reconfiguration message.

For example, the first RRC message may include information about the switched first QoS flow. For example, the first RRC message may include the identifier of the first QoS flow.

In an optional solution, the first RRC message may further include the first information, where the first information is used to instruct the terminal device to set up, with the master base station, the first bearer corresponding to the first session, the QoS flow corresponding to the first bearer includes the first QoS flow, and the first information includes the configuration parameter of the first bearer.

The configuration parameter of the first bearer includes at least one of the following: the mapping relationship between the first bearer and the QoS flow, and the parameter of the QoS flow included by the first bearer.

The configuration parameter of the first bearer may include the QoS flow included by the first bearer and the parameter of the QoS flow included by the first bearer.

Further, in step 640, the terminal device sends a first RRC response message to the master base station, and correspondingly, the master base station receives the first RRC response message from the terminal device. The first RRC response message is used to respond to the first RRC message.

In some embodiments, the first RRC message may be an RRC connection reconfiguration message, and the first RRC response message may be an RRC connection reconfiguration response message.

In this embodiment of this application, in the dual connectivity scenario, the master base station sends the first RRC message to the terminal device, to indicate that the first QoS flow of the first session is switched from the secondary base station to the master base station, so that the terminal device performs corresponding data processing, thereby implementing quality of service management at a smaller granularity in a QoS flow switching process, and improving communication efficiency.

The foregoing mainly describes a signaling procedure in which a QoS flow is switched from the secondary base station to the master base station in the dual connectivity scenario. The following describes a data switching (data forwarding) process in QoS flow switching by using an example in which a QoS flow is switched from the secondary base station to the master base station. A person skilled in the art can understand that the following data switching process is also applicable to a process in which a QoS flow is switched from the master base station to the secondary base station. In a QoS flow switching process, a large quantity of data packets for which no response has been received exist on the secondary base station side or the terminal device side, or the secondary base station buffers data that is received from the core network and that is not sent to the terminal device. Therefore, how to ensure hitless switching in a switching scenario is an important problem that needs to be resolved in the industry.

To resolve the foregoing problem, two switching solutions are mainly used in this embodiment of this application. In a first feasible switching solution, in a QoS flow switching process, the secondary base station and the master base station may not simultaneously perform data transmission with the terminal device. For example, after the secondary base station receives a switching request message, the secondary base station and the terminal device may continue to transmit data that is buffered on both sides and for which no response has been received. During this period, the secondary base station may buffer data that is sent by the core network to the terminal device, and after transmission of data that has not been responded to and that is between the secondary base station and the terminal device is completed, the secondary base station transmits, to the master base station, the data sent by the core network. In addition, new data transmission starts between the master base station and the terminal device. Alternatively, the secondary base station does not need to buffer data sent by the core network to the terminal device, but keeps sending data to the terminal device until an end marker "end marker" sent by the core network is received. New data transmission starts between the master base station and the terminal device.

In a second feasible switching solution, in a QoS flow switching process, the secondary base station and the master base station may simultaneously perform data transmission with the terminal device. That is, the secondary base station and the master base station set up a same bearer with the terminal device. The bearer between a target base station and the terminal device may be the first bearer, and the bearer between the secondary base station and the terminal device may be the second bearer. The following mainly describes the data switching (data forwarding) in the QoS flow switching process with reference to the second feasible switching solution.

The foregoing data packet may include a packet data convergence protocol (packet data convergence protocol, PDCP) service data unit (service data unit, SDU). The PDCP SDU may be a data packet transmitted between a base station and the terminal device at a PDCP layer. The PDCP layer is a sublayer of a data link (data link) layer in a radio access protocol architecture. The data link layer may also be referred to as a layer 2. Lower layer sub-protocols of the PDCP layer include a radio link control (radio link control) layer. An upper layer protocol of the PDCP layer is an RRC layer. Optionally, in this embodiment of this application, a new protocol layer is added between the PDCP layer and the RRC layer, and the protocol layer is a service data adaptation protocol (Service Data Adaptation Protocol, SDAP). Functions of the SDAP layer include but are not limited to: processing a mapping from a QoS flow to a DRB, and adding a QoS flow ID to a packet header of a data packet.

As mentioned in FIG. 3 to FIG. 5, in a process in which the terminal device is handed over from the secondary base station to the master base station, there may be the following two types of QoS flow switching. In a first case, all QoS flows on a same bearer in the first session are switched to the master base station. In a second case, some QoS flows on a same bearer in the first session are switched to the master base station, and the other QoS flows are still transmitted from the secondary base station. QoS flows that are on a same bearer and that are switched to the master base station may be the first QoS flow, and QoS flows that are on a same bearer and that are not switched to the master base station may be the second QoS flow.

For the foregoing plurality of cases, this embodiment of this application provides a plurality of data switching solutions. The following describes the data switching solutions in this application with reference to two cases: uplink data transmission (upload load, UL) and downlink data transmission (down load, DL).

In a DL process, the secondary base station mainly buffers two types of data. A first type of data is the data packet that is received from the core network, that corresponds to the first QoS flow and that has not been sent to the terminal. Before receiving the end marker (end marker) sent by the core network, the secondary base station keeps receiving and buffering the data packet. A second type of data is a data packet that is being transmitted by the secondary base station to the terminal device by using the second bearer and for which no response has been received. The data packet may be a PDCP SDU, and is being transmitted at a PDCP layer. The data packet for which no response has been received may be a PDCP SDU for which no acknowledgment or response has been received from an RLC layer of a base station.

In a UL process, the secondary base station further buffers a third type of data. The third type of data is out-of-order data packets received by the secondary base station from the terminal device. That is, sequence numbers of the foregoing data packets are nonconsecutive. The secondary base station needs to sequentially submit data packets to a higher layer. Therefore, for the data packets with the nonconsecutive sequence numbers, the secondary base station needs to temporarily buffer the data packets, and after receiving a remaining data packet, submit all data packets to the higher layer in sequence. The data packet may be a PDCP SDU, and the higher layer may be a protocol layer above a PDCP layer. For example, the higher layer may be an SDAP layer or an RRC layer. In addition, in the UL process, the terminal device further buffers a fourth type of data, and the fourth type of data is a data packet that is being transmitted by the terminal device to the secondary base station and for which no response has been received. The data packet may be a PDCP SDU, and is being transmitted at a PDCP layer. The data packet for which no response has been received may be a PDCP SDU for which no acknowledgment or response has been received from an RLC layer of the terminal device.

For the two types of data in the DL, because the first type of data is transmitted based on a QoS flow, and has not been mapped onto a bearer, the secondary base station may transmit the first type of data to the master base station. The first type of data may be first data described below.

In an optional solution, the method 600 further includes: sending, by the secondary base station, first data to the master base station, and correspondingly, receiving, by the master base station, the first data from the secondary base station, where the first data is data that corresponds to the first QoS flow and that is received by the secondary base station from a core network; and sending, by the master base station, the first data to the terminal device by using the first bearer.

For example, the receiving, by the master base station, the first data from the secondary base station includes: receiving, by the master base station, the first data from the secondary base station through a session tunnel.

In the method 600, for a transmission mode of the first data, the secondary base station may transmit the first data to the master base station by using two solutions. FIG. 7 and FIG. 8 are separately schematic diagrams of data switching in the foregoing two solutions.

As shown in FIG. 7, in a first solution, the secondary base station continues to serve the data packet corresponding to the first QoS flow, and transmits, at the PDCP layer, the first data to the master base station. Specifically, the secondary base station may send, based on a tunnel at a DRB granularity and the DCP SDU corresponding to the first data, the PDCP SDU corresponding to the first data to the master base station.

As shown in FIG. 8, in a second solution, the secondary base station does not continue to serve the data packet corresponding to the first QoS flow, but sends the first data to the master base station through a session tunnel. The session tunnel may be a tunnel at a session granularity. A data packet format of the tunnel at the session granularity may be the same as a data packet format transmitted by the core network to the secondary base station. Therefore, after obtaining the first data from the core network, the secondary base station does not need to process the first data, and may directly send the first data to the master base station, thereby saving resources for processing the first data, and improving communication efficiency.

In this embodiment of this application, the first data sent by the core network to the terminal device is forwarded through the session tunnel between the secondary base station and the master base station, and the first data does not need to be transmitted at the PDCP layer. Therefore, a time and an occupied resource for processing the first data are reduced, and communication efficiency is improved.

For example, a format of the session tunnel may include a GPRS tunneling protocol (GPRS Tunnelling Protocol)

More specifically, a QFI identifier and/or a reflective QoS indication (reflective QoS indication, RQI) identifier may be added to a GTP extension header (extension header). A specific implementation of the GTP header is shown in the following Table 3.

**Table 3**

| Extension header flag | Extension header type | | | | | |
|---|---|---|---|---|---|---|
| 1100 0100 | RQI | | | | | |
| 1100 0011 | QFI | | | | | |
| ... | ... | | | | | |

For the fourth type of data in the UL, when the fourth type of data includes the following first PDCP SDU, in an optional solution, the method 600 further includes: sending, by the terminal device, a first PDCP SDU to the master base station by using the first bearer; and correspondingly, receiving, by the master base station, the first PDCP SDU from the terminal device by using the first bearer, where the first PDCP SDU includes a PDCP SDU that is sent by the terminal device to the secondary base station by using the second bearer and for which no response has been received. Further, the master base station determines a second PDCP SDU, where the second PDCP SDU is a PDCP SDU that is in the first PDCP SDU and that corresponds to the first QoS flow; and the master base station transmits the second PDCP SDU to a higher layer.

The higher layer may be a protocol layer above a PDCP layer of the base station. For example, the higher layer may be an SDAP layer, an RRC layer, a transmission control protocol (Transmission Control Protocol, TCP) layer, an internet protocol (internet protocol, IP) layer, or the like.

Because the second PDCP SDU is a PDCP SDU corresponding to the first QoS flow, in a QoS flow switching process, sequence numbers of second PDCP SDUs may be nonconsecutive. Usually, after receiving PDCP SDUs, the terminal device or the base station needs to sequentially transfer the PDCP SDUs to the higher layer according to sequence numbers. However, data corresponding to the second QoS flow is not transmitted between the master base station and the terminal device. Therefore, the master base station may identify the second PDCP SDU from the first PDCP SDU. In this way, even if the sequence numbers of the second PDCP SDUs are nonconsecutive, the master base station may transmit the second PDCP SDUs to the higher layer, thereby improving communication efficiency, and improving data processing efficiency in the QoS flow switching process.

In this embodiment of this application, when receiving the first PDCP SDU by using the first bearer, the master base station does not need to process a PDCP SDU corresponding to the second QoS flow, but only needs to process a PDCP SDU corresponding to the first QoS flow, thereby improving.

For the third type of data in the UL, when the third type of data includes the following third PDCP SDU, in an optional solution, the method 600 further includes: receiving, by the master base station, a third PDCP SDU from the secondary base station, where the third PDCP SDU includes a PDCP SDU that is received by the secondary base station from the terminal device by using the second bearer, and the third PDCP SDU corresponds to the first QoS flow; and transmitting, by the master base station, the third PDCP SDU to the higher layer.

The higher layer may be a protocol layer above a PDCP layer of the base station. For example, the higher layer may be an SDAP layer or an RRC layer.

For the second type of data in the DL, if the second type of data includes the following fourth PDCP SDU, the method 600 further includes: sending, by the secondary base station, a fourth PDCP SDU to the master base station, and correspondingly, receiving, by the master base station, the fourth PDCP SDU from the secondary base station, where the fourth PDCP SDU includes a PDCP SDU that is sent by the secondary base station to the terminal device by using the second bearer and for which no response has been received. Further, the method 600 further includes: sending, by the master base station, the fourth PDCP SDU to the terminal device by using the first bearer; and correspondingly, receiving, by the terminal device, the fourth PDCP SDU by using the first bearer. Further, the method 600 further includes: determining, by the terminal device, a seventh PDCP SDU, where the seventh PDCP SDU includes a PDCP SDU that is in the fourth PDCP SDU and that corresponds to the first QoS flow; and transmitting, by the terminal device, the seventh PDCP SDU to the higher layer.

Because the fourth PDCP SDU may include data corresponding to the first QoS flow and the second QoS flow, for the first bearer, the terminal device needs to upload only the seventh PDCP SDU corresponding to the first QoS flow to the higher layer, and does not need to process a PDCU SDU that is in the fourth PDCP SDU and that corresponds to the second QoS flow. Therefore, data processing efficiency is improved in the QoS flow switching process.

In the UL process, the secondary base station does not need to continue to process data in the first QoS flow, but needs to process only data in the second QoS flow. Therefore, in an optional solution, the method 600 further includes: receiving, by the secondary base station, a fifth PDCP SDU from the terminal device by using the second bearer, where the fifth PDCP SDU includes PDCP SDUs that correspond to the first QoS flow and a second QoS flow, and the second QoS flow is a QoS flow that is on the second bearer and that has not been switched to the master base station. Further, the secondary base station determines a sixth PDCP SDU, where the sixth PDCP SDU is a PDCP SDU that is in the fifth PDCP SDU and that corresponds to the second QoS flow. Further, the secondary base station transmits the sixth PDCP SDU to the higher layer.

The higher layer may be a protocol layer above a PDCP layer of the base station. For example, the higher layer may be an SDAP layer or an RRC layer.

Because the sixth PDCP SDU is a PDCP SDU corresponding to the second QoS flow, in a QoS flow switching process, sequence numbers of sixth PDCP SDUs may be nonconsecutive. Usually, after receiving PDCP SDUs, the terminal device or the base station needs to sequentially transfer the PDCP SDUs to the higher layer according to sequence numbers. However, data corresponding to the first QoS flow is not transmitted between the terminal device and the secondary base station. Therefore, the terminal device may identify the sixth PDCP SDU from the fifth PDCP SDU. In this way, even if the sequence numbers of the sixth PDCP SDUs are nonconsecutive, the terminal device may transmit the sixth PDCP SDUs to the higher layer, thereby improving communication efficiency, and improving data processing efficiency in the QoS flow switching process.

In this embodiment of this application, in the dual connectivity scenario, when the secondary base station switches the QoS flow to the master base station, and the secondary base station receives, by using the second bearer, the first QoS flow that has been switched and the fifth PDCP SDU corresponding to the second QoS flow that has not been switched, the secondary base station does not need to process the PDCP SDU corresponding to the first QoS flow. In this way, data processing efficiency is improved in the QoS flow switching process.

In the DL process, when receiving the PDCP SDU from the second bearer, the terminal device does not need to continue to process the data in the first QoS flow, but needs to process only the data in the second QoS flow. Therefore, in an optional solution, the method 600 further includes: sending, by the secondary base station, an eighth PDCP SDU to the terminal device by using the second bearer, and receiving, by the terminal device, the eighth PDCP SDU from the secondary base station by using the second bearer. Further, the terminal device determines a ninth PDCP SDU, where the ninth PDCP SDU includes a PDCP SDU that is in the eighth PDCP SDU and that corresponds to a second QoS flow, and the second QoS flow is a QoS flow that is on the second bearer and that has not been switched to the master base station. Further, the terminal device transmits the ninth PDCP SDU to the higher layer.

Because the ninth PDCP SDU is a PDCP SDU corresponding to the second QoS flow, in a QoS flow switching process, sequence numbers of ninth PDCP SDUs may be nonconsecutive. Usually, after receiving PDCP SDUs, the terminal device or the base station needs to sequentially transfer the PDCP SDUs to the higher layer according to sequence numbers. However, data corresponding to the first QoS flow is not transmitted between the terminal device and the secondary base station. Therefore, the terminal device may identify the ninth PDCP SDU from the eighth PDCP SDU. In this way, even if the sequence numbers of the ninth PDCP SDUs are nonconsecutive, the terminal device may transmit the ninth PDCP SDUs to the higher layer, thereby improving communication efficiency, and improving data processing efficiency in the QoS flow switching process.

FIG. 9 is a schematic flowchart of data switching in the UL process. As shown in FIG. 9, switching from an SN to an MN is used as an example. In FIG. 9, the first bearer between the master base station and the terminal device may be a DRB 1, and the second bearer between the secondary base station and the terminal device may be a DRB 2.

On the terminal device side, after the terminal device receives the first RRC message, the terminal device sends, by using the DRB 2, the PDCP SDU corresponding to the first QoS flow and the PDCP SDU corresponding to the second QoS flow. In addition, the terminal device may duplicate a PDCP SDU in the DRB 2 to the DRB 1, and send the duplicated PDCP SDU by using the DRB 1.

On the secondary base station side, between the secondary base station and the master base station, the secondary base station may duplicate out-of-order PDCP SDUs that are received from the terminal device and that are on the DRB 2, and send the out-of-order PDCP SDUs to the master base station. Further, the secondary base station may further send sequence numbers of out-of-order PDCP SDUs to the master base station. Between the secondary base station and the terminal device, at an SDAP layer of the secondary base station, for a PDCP SDU received from the DRB 2, the secondary base station transfers, to the higher layer based on a QoS flow identifier indicated by an SDAP header of the PDCP SDU, only a PDCP SDU belonging to the second QoS flow that has not been switched.

On the master base station side, a new DRB 1 is set up between the master base station and the terminal device, and a configuration parameter of the DRB 1 may be the same as that of the DRB 2. In addition, the master base station may send a first RRC message to the terminal device, to indicate that the first QoS flow is switched from the secondary base station to the master base station. At an SDAP layer of the master base station, for a PDCP SDU received from the DRB 1, the master base station transfers, based on a QoS flow identifier indicated by an SDAP header of the PDCP SDU, to the higher layer, only a PDCP SDU belonging to the first QoS flow that has been switched.

In this embodiment of this application, in the dual connectivity scenario, when the secondary base station switches the QoS flow to the master base station, and the secondary base station receives, by using the second bearer, the first QoS flow that has been switched and the PDCP SDU corresponding to the second QoS flow that has not been switched, the secondary base station does not need to process the PDCP SDU corresponding to the first QoS flow. When receiving, by using the first bearer, the first QoS flow that has been switched and the PDCP SDU corresponding to the second QoS flow that has not been switched, the master base station does not need to process the PDCP SDU corresponding to the second QoS flow. In this way, data processing efficiency is improved in the QoS flow switching process.

FIG. 10 is a schematic flowchart of data switching in the DL process. As shown in FIG. 9, switching from an SN to an MN is used as an example. In FIG. 9, the first bearer may be a DRB 1, and the second bearer may be a DRB 2.

On the secondary base station side, the secondary base station duplicates a PDCP SDU that is on a corresponding DRB 2 and that has not been responded to by a bottom layer, and sends the PDCP SDU to the master base station. Further, the secondary base station may send a sequence number of the PDCP SDU to the master base station. In addition, the secondary base station may continue to transmit, by using the DRB 2, a PDCP SDU that is not responded to by the bottom layer, until a response from the bottom layer is received.

On the master base station side, the master base station may create a DRB 1 that has a same configuration as the DRB 2, and send, to the terminal device by using the DRB 2, a PDCP SDU received from the secondary base station, until a response from the bottom layer is received.

On the terminal device side, the terminal device receives, from the secondary base station by using the DRB 2, the PDCP SDU corresponding to the first QoS flow and the PDCP SDU corresponding to the second QoS flow. The terminal device receives, by using the DRB 1, the PDCP SDU corresponding to the first QoS flow and the PDCP SDU corresponding to the second QoS flow. At the SDAP layer of the terminal device, for a PDCP SDU received from the DRB 2, the terminal device transfers, to the higher layer based on a QoS flow identifier indicated by an SDAP header of the PDCP SDU, only a PDCP SDU belonging to the second QoS flow that has not been switched. For a PDCP SDU received from the DRB 1, the terminal device transfers, to the higher layer based on a QoS flow identifier indicated by an SDAP header of the PDCP SDU, only a PDCP SDU belonging to the first QoS flow that has been switched.

In this embodiment of this application, in the dual connectivity scenario, when the secondary base station switches the QoS flow to the master base station, and the terminal device base station receives, by using the second bearer, the first QoS flow that has been switched and the PDCP SDU corresponding to the second QoS flow that has not been switched, the terminal device does not need to process the PDCP SDU corresponding to the first QoS flow. When receiving, by using the first bearer, the first QoS flow that has been switched and the PDCP SDU corresponding to the second QoS flow that has not been switched, the terminal device does not need to process the PDCP SDU corresponding to the second QoS flow. In this way, data processing efficiency is improved in the QoS flow switching process.

FIG. 11 is an interaction flowchart of a specific example of a communication method according to another embodiment of this application. For content in an example in FIG. 11 that is the same as or similar to that in FIG. 6, refer to corresponding content in FIG. 6, and details are not described herein again. As shown in FIG. 11, the method 1100 includes the following steps.

S1101. A master base station sends an SN modification request message to a secondary base station, where the message includes a QoS flow for which switching is to be requested, and includes a plurality of QoS flow lists when there are a plurality of QoS flows.

Specifically, for content related to the SN modification request message, refer to the example in FIG. 6.

S1102. The secondary base station sends an SN modification request response message to the master base station.

In the message, to transfer PDCP SDUs for which no response has been received from a bottom layer (for example, an RLC layer), a same DRB is set up on the master base station, and a QoS flow (that is, including a to-be-switched QoS flow and a QoS flow that is on the same bearer and that is not to be switched) included by the switched bearer and mapping between the QoS flow and the DRB are sent to the SN.

S1103. The master base station sends an RRC connection reconfiguration message to a terminal device. The RRC connection reconfiguration message carries the following information: a mapping relationship that is between the QoS flow and the DRB and that is sent by the master base station to the terminal device, and information about the to-be-switched QoS flow sent by the master base station.

S1104. The terminal device performs new configuration, and sends an RRC configuration complete message.

S1105. The master base station sends the RRC configuration complete message to the secondary base station.

S1106. The terminal device synchronizes with the secondary base station, and performs a random access procedure.

S1107 and S1108. Perform a data switching process.

For content related to the data switching, refer to corresponding descriptions in FIG. 6.

S1109. Perform a path update process with a core network.

FIG. 12 is a schematic diagram of a communication method 1200 according to another embodiment of this application. The method 1200 shows a method for switching a QoS flow from a secondary base station to a master base station. Content in FIG. 12 that is the same as or similar to that in FIG. 6 to FIG. 11 is not described herein again. The method 1200 includes the following steps.

In step 1210, the master base station sends a first request message to the secondary base station, and correspondingly, the secondary base station receives the first request message from the master base station. The first request message is used to instruct to switch a first QoS flow of a first session from the master base station to the secondary base station, and the first session is a session corresponding to a terminal device.

In step 1220, the secondary base station sends a first response message to the master base station, and correspondingly, the master base station receives the first response message from the secondary base station. The first response message is used to respond to the first request message.

In some embodiments, the first request message may be a secondary node (secondary node, SN) addition request message. Concepts of the secondary node and the secondary base station may be interchanged.

In some embodiments, the first response message may be an SN addition request response message.

In this embodiment of this application, in a dual connectivity scenario, the master base station sends the first request message to the secondary base station, to instruct to switch the first QoS flow of the first session from the master base station to the secondary base station, where the first session is a session corresponding to the terminal device. In this way, QoS flow granularity-based switching can be implemented in the dual connectivity scenario, thereby improving communication efficiency.

Optionally, the method 1200 further includes step 1230 and step 1240.

In step 1230, the master base station sends a first RRC message to the terminal device, and correspondingly, the terminal device receives the first RRC message from the master base station. The first RRC message is used to indicate that the first QoS flow of the first session is switched from the master base station to the secondary base station.

Further, in step 1240, the terminal device sends a first RRC response message to the master base station, and correspondingly, the master base station receives the first RRC response message from the terminal device. The first RRC response message is used to respond to the first RRC message.

In some embodiments, the first RRC message may be an RRC connection reconfiguration message, and the first RRC response message may be an RRC connection reconfiguration response message.

In this embodiment of this application, in the dual connectivity scenario, the master base station sends the first RRC message to the terminal device, to indicate that the first QoS flow of the first session is switched from the master base station to the secondary base station, so that the terminal device performs corresponding data processing, thereby implementing quality of service management at a smaller granularity in a QoS flow switching process, and improving communication efficiency.

In a possible implementation, the method further includes: sending, by the master base station, first information to the terminal device, where the first information is used to instruct the terminal device to set up, with the secondary base station, a first bearer corresponding to the first session, a QoS flow corresponding to the first bearer includes the first QoS flow, and the first information includes a configuration parameter of the first bearer.

In some embodiments, the first information may be carried in the first RRC message.

In some other embodiments, the first information and the first RRC message may be separately sent.

In some embodiments, before the master base station sends the first RRC message to the terminal device, the method further includes: receiving, by the master base station, the first information from the secondary base station. In other words, the master base station is configured to transparently transmit the first information between the secondary base station and the terminal device.

In a possible implementation, the configuration parameter of the first bearer is the same as a configuration parameter of a second bearer, the second bearer is a bearer that is between the terminal device and the master base station and that is in the first session, and a QoS flow corresponding to the second bearer includes the first QoS flow. The method further includes: sending, by the master base station, second information to the secondary base station, where the second information includes the configuration parameter of the second bearer, and a QoS flow corresponding to the second bearer includes the first QoS flow.

In this embodiment of this application, the master base station sends the second information to the secondary base station, so that the secondary base station determines the first information based on the second information, to implement QoS flow switching based on a QoS flow granularity, thereby improving communication efficiency.

In some embodiments, the second information may be carried in the first request message.

In some other embodiments, the second information and the first request message may be separately sent.

In a possible implementation, the configuration parameter of the second bearer includes at least one of the following: a mapping relationship between the second bearer and the QoS flow, and a parameter of the QoS flow included by the second bearer.

In a possible implementation, the method further includes: sending, by the master base station, first data to the secondary base station, and correspondingly, receiving, by the secondary base station, the first data from the master base station, where the first data is data that corresponds to the first QoS flow and that is received by the master base station from a core network.

In a possible implementation, the sending, by the master base station, first data to the secondary base station includes: sending, by the master base station, the first data to the secondary base station through a session tunnel. Correspondingly, the secondary base station receives the first data from the secondary base station through the session tunnel.

In a possible implementation, the method further includes: sending, by the terminal device, the first PDCP SDU to the secondary base station by using the first bearer; and correspondingly, receiving, by the secondary base station, the first PDCP SDU from the terminal device by using the first bearer, where the first PDCP SDU includes a PDCP SDU that is sent by the terminal device to the master base station by using the second bearer and for which no response has been received.

Further, the method 1200 further includes: determining, by the secondary base station, a second PDCP SDU, where the second PDCP SDU is a PDCP SDU that is in the first PDCP SDU and that corresponds to the first QoS flow. Further, the secondary base station transmits the second PDCP SDU to a higher layer.

In a possible implementation, the method further includes: sending, by the master base station, a third PDCP SDU to the secondary base station, and correspondingly, receiving, by the secondary base station, the third PDCP SDU from the master base station. The third PDCP SDU includes a PDCP SDU that is received by the master base station from the terminal device by using the second bearer, and the third PDCP SDU corresponds to the first QoS flow.

Further, the secondary base station transmits the third PDCP SDU to the higher layer.

In a possible implementation, the method further includes: sending, by the master base station, a fourth PDCP SDU to the secondary base station, and correspondingly, receiving, by the secondary base station, the fourth PDCP SDU from the master base station, where the fourth PDCP SDU includes a PDCP SDU that is sent by the master base station to the terminal device by using the second bearer and for which no response has been received.

Further, the method 1200 further includes: determining, by the terminal device, a seventh PDCP SDU, where the seventh PDCP SDU includes a PDCP SDU that is in the fourth PDCP SDU and that corresponds to the first QoS flow; and transmitting, by the terminal device, the seventh PDCP SDU to the higher layer.

Further, the method 1200 further includes: sending, by the secondary base station, the fourth PDCP SDU to the terminal device by using the first bearer; and correspondingly, receiving, by the terminal device, the fourth PDCP SDU from the secondary base station.

In a possible implementation, the method further includes: receiving, by the master base station, a fifth PDCP SDU from the terminal device by using the second bearer, where the fifth PDCP SDU includes PDCP SDUs that correspond to the first QoS flow and a second QoS flow, and the second QoS flow is a QoS flow that is on the second bearer and that has not been switched to the secondary base station; determining, by the master base station, a sixth PDCP SDU, where the sixth PDCP SDU is a PDCP SDU that is in the fifth PDCP SDU and that corresponds to the second QoS flow; and transmitting, by the master base station, the sixth PDCP SDU to the higher layer.

In a possible implementation, the method 1200 further includes: sending, by the master base station, an eighth PDCP SDU to the secondary base station by using the second bearer; receiving, by the terminal device, the eighth PDCP SDU from the master base station by using the second bearer; determining, by the terminal device, a ninth PDCP SDU, where the ninth PDCP SDU includes a PDCP SDU that is in the eighth PDCP SDU and that corresponds to a second QoS flow, and the second QoS flow is a QoS flow that is on the second bearer and that has not been switched to the secondary base station; and transmitting, by the terminal device, the ninth PDCP SDU to the higher layer.

FIG. 13 is an interaction flowchart of a specific example of a communication method according to another embodiment of this application. For content that is in the example in FIG. 13 and that is the same as or similar to content in the examples in FIG. 6 and FIG. 12, refer to corresponding content in the examples in FIG. 6 and FIG. 12. Details are not described herein again. As shown in FIG. 13, the method 1300 includes the following steps.

S1301. A master base station sends an SN addition request message to a secondary base station, where the message includes a to-be-switched QoS flow and a QoS flow parameter corresponding to the QoS flow, and includes a plurality of QoS flow lists when there are a plurality of QoS flows.

In addition, to transfer PDCP SDUs for which no response has been received from a bottom layer (an RLC layer), a same DRB is set up on a destination side, and a QoS flow included by the switched bearer and a corresponding QoS parameter (that is, mapping between the QoS flow and the DRB) are sent to the SN.

S1302. The secondary base station sends a response message to the master base station.

S1303. The master base station sends an RRC connection reconfiguration message to a terminal device, where the RRC connection reconfiguration message carries the following information: a mapping relationship that is between the QoS flow and the DRB and that is sent by the secondary base station to the UE, and information about the to-be-switched QoS flow sent by the master base station.

S1304. The UE performs new configuration, and sends a configuration complete message.

S1305. The master base station sends the configuration complete message to the secondary base station, and after receiving the configuration complete message, the secondary base station performs an operation in Embodiment 1.

S1306. The UE synchronizes with the secondary base station, and performs random access.

S1307 and S1308. Perform the described data forwarding process.

S1309. Perform a path update process with a core network.

FIG. 14 is a schematic diagram of a communication method 1400 according to another embodiment of this application. The method 1400 shows a method for switching a QoS flow from a secondary base station to a master base station. Content in FIG. 14 that is the same as or similar to that in FIG. 6 to FIG. 13 is not described herein again. The method 1400 includes the following steps.

In step 1410, the secondary base station sends a first request message to the master base station, and correspondingly, the master base station receives the first request message from the secondary base station, where the first request message is used to instruct to switch a first QoS flow of a first session from the secondary base station to the master base station, and the first session is a session corresponding to a terminal device.

In step 1420, the master base station sends a first response message to the secondary base station, and correspondingly, the secondary base station receives the first response message from the master base station. The first response message is used to respond to the first request message.

In some embodiments, the first request message may be a secondary node (secondary node, SN) modification request message. Concepts of the secondary node and the secondary base station may be interchanged.

In some embodiments, the first response message may be an SN modification request response message.

In some other embodiments, the first request message may be an SN modification requirement message, and the first response message may be an SN modification request message. When the first response message is an SN modification request message, after the sending, by the master base station, a first response message to the secondary base station, the method further includes: receiving, by the master base station, an SN modification request response message from the secondary base station.

In this embodiment of this application, in a dual connectivity scenario, the secondary base station sends the first request message to the master base station, to instruct to switch the first QoS flow of the first session from the secondary base station to the master base station, where the first session is a session corresponding to the terminal device. In this way, QoS flow granularity-based switching can be implemented in the dual connectivity scenario, thereby improving communication efficiency.

Optionally, the method 1400 further includes step S1430 and step S1440.

In step S1430, the master base station sends a first RRC message to the terminal device, and correspondingly, the terminal device receives the first RRC message from the master base station. The first RRC message is used to indicate that the first QoS flow of the first session is switched from the secondary base station to the master base station.

In some embodiments, the first RRC message may be an RRC connection reconfiguration message, and the first RRC response message may be an RRC connection reconfiguration response message.

Further, in step 1440, the terminal device sends a first RRC response message to the master base station, and correspondingly, the master base station receives the first RRC response message from the terminal device. The first RRC response message is used to respond to the first RRC message.

In some embodiments, the first RRC message may be an RRC connection reconfiguration message, and the first RRC response message may be an RRC connection reconfiguration response message.

In this embodiment of this application, in the dual connectivity scenario, the master base station sends the first RRC message to the terminal device, to indicate that the first QoS flow of the first session is switched from the secondary base station to the master base station, so that the terminal device performs corresponding data processing, thereby implementing quality of service management at a smaller granularity in a QoS flow switching process, and improving communication efficiency.

In a possible implementation, the method further includes: sending, by the master base station, first information to the terminal device, where the first information is used to instruct the terminal device to set up, with the master base station, a first bearer corresponding to the first session, a QoS flow corresponding to the first bearer includes the first QoS flow, and the first information includes a configuration parameter of the first bearer.

In some embodiments, the first information may be carried in the first RRC message.

In some other embodiments, the first information and the first RRC message may be separately sent.

In a possible implementation, the configuration parameter of the first bearer is the same as a configuration parameter of a second bearer, the second bearer is a bearer that is between the terminal device and the secondary base station and that is in the first session, and a QoS flow corresponding to the second bearer includes the first QoS flow. The method further includes: receiving, by the master base station, second information from the secondary base station, where the second information includes the configuration parameter of the second bearer; and determining, by the master base station, the first information based on the second information.

In some embodiments, the second information may be carried in the first request message.

In some other embodiments, the second information and the first request message may be separately sent.

In a possible implementation, the configuration parameter of the first bearer includes at least one of the following: a mapping relationship between the first bearer and the QoS flow, and a parameter of the QoS flow included by the first bearer.

In a possible implementation, the configuration parameter of the second bearer includes at least one of the following: a mapping relationship between the second bearer and the QoS flow, and a parameter of the QoS flow included by the second bearer.

In a possible implementation, the method further includes: sending, by the secondary base station, first data to the master base station, and correspondingly, receiving, by the master base station, the first data from the secondary base station, where the first data is data that corresponds to the first QoS flow and that is received by the secondary base station from a core network.

In a possible implementation, the sending, by the secondary base station, first data to the master base station includes: sending, by the secondary base station, the first data to the master base station through a session tunnel; and correspondingly, receiving, by the master base station, the first data from the secondary base station through the session tunnel.

In a possible implementation, the method further includes: sending, by the terminal device, the first PDCP SDU to the master base station by using the first bearer; and correspondingly, receiving, by the master base station, the first PDCP SDU from the terminal device by using the first bearer, where the first PDCP SDU includes a PDCP SDU that is sent by the terminal device to the secondary base station by using the second bearer and for which no response has been received.

Further, the method 1400 further includes: determining, by the master base station, a second PDCP SDU, where the second PDCP SDU is a PDCP SDU that is in the first PDCP SDU and that corresponds to the first QoS flow. Further, the master base station transmits the second PDCP SDU to a higher layer.

In a possible implementation, the method further includes: sending, by the secondary base station, a third PDCP SDU to the master base station, and correspondingly, receiving, by the master base station, the third PDCP SDU from the secondary base station. The third PDCP SDU includes a PDCP SDU that is received by the secondary base station from the terminal device by using the second bearer, and the third PDCP SDU corresponds to the first QoS flow.

Further, the master base station transmits the third PDCP SDU to the higher layer.

In a possible implementation, the method further includes: sending, by the secondary base station, a fourth PDCP SDU to the master base station, and correspondingly, receiving, by the master base station, the fourth PDCP SDU from the secondary base station, where the fourth PDCP SDU includes a PDCP SDU that is sent by the secondary base station to the terminal device by using the second bearer and for which no response has been received.

Further, the method 1400 further includes: determining, by the terminal device, a seventh PDCP SDU, where the seventh PDCP SDU includes a PDCP SDU that is in the fourth PDCP SDU and that corresponds to the first QoS flow; and transmitting, by the terminal device, the seventh PDCP SDU to the higher layer.

Further, the method 1400 further includes: sending, by the master base station, the fourth PDCP SDU to the terminal device by using the first bearer; and correspondingly, receiving, by the terminal device, the fourth PDCP SDU from the master base station.

In a possible implementation, the method further includes: receiving, by the secondary base station, a fifth PDCP SDU from the terminal device by using the second bearer, where the fifth PDCP SDU includes PDCP SDUs that correspond to the first QoS flow and a second QoS flow, and the second QoS flow is a QoS flow that is on the second bearer and that has not been switched to the master base station; determining, by the secondary base station, a sixth PDCP SDU, where the sixth PDCP SDU is a PDCP SDU that is in the fifth PDCP SDU and that corresponds to the second QoS flow; and transmitting, by the secondary base station, the sixth PDCP SDU to a higher layer.

In a possible implementation, the method 1400 further includes: sending, by the secondary base station, an eighth PDCP SDU to the master base station by using the second bearer; receiving, by the terminal device, the eighth PDCP SDU from the secondary base station by using the second bearer; determining, by the terminal device, a ninth PDCP SDU, where the ninth PDCP SDU includes a PDCP SDU that is in the eighth PDCP SDU and that corresponds to a second QoS flow, and the second QoS flow is a QoS flow that is on the second bearer and that has not been switched to the master base station; and transmitting, by the terminal device, the ninth PDCP SDU to the higher layer.

FIG. 15 is an interaction flowchart of a specific example of a communication method according to another embodiment of this application. For content in an example in FIG. 15 that is the same as or similar to that in FIG. 6 to FIG. 14, refer to corresponding content in FIG. 6 to FIG. 14, and details are not described herein again. As shown in FIG. 15, an example in FIG. 15 includes the following steps.

S1501. A secondary base station sends an SN modification requirement message to a master base station, where the message includes a QoS flow for which switching is to be requested, and includes a plurality of QoS flow lists when there are a plurality of QoS flows.

In this message, to transfer PDCP SDUs for which no response has been received from a bottom layer (an RLC layer), a same DRB is set up on the master base station, and a QoS flow (that is, including a to-be-switched QoS flow and a QoS flow that is on the same bearer and that is not to be switched) included by the switched bearer and mapping between the QoS flow and the DRB are sent to the master base station.

S1502 and S1503. The master base station and the secondary base station transmit an SN modification request and an SN modification response message.

S1504. The master base station sends an RRC connection reconfiguration message to a terminal device. The RRC connection reconfiguration message carries the following information: the mapping relationship that is between the QoS flow and the DRB and that is sent by the master base station to the UE and information about the to-be-switched QoS flow sent by the master base station

S1505. The UE performs new configuration, and sends a configuration complete message.

S1506. The master base station sends the configuration complete message to the secondary base station.

S1507. The terminal device synchronizes with the secondary base station, and performs a random access procedure.

S1508 and S1509. Perform a data switching process. For content related to the data switching, refer to corresponding descriptions in FIG. 6 or FIG. 14.

S1510. Perform a path update process with a core network.

In the examples in FIG. 6 and FIG. 11 to FIG. 15, when the first QoS flow is switched from the master base station to the secondary base station, or the first QoS flow is switched from the secondary base station to the master base station, the RRC message corresponding to the terminal device is sent by the master base station to the terminal device. For example, the RRC message corresponding to the terminal device may include the first RRC message and the first RRC response message. In a possible solution, the secondary base station may also include an SRB. Therefore, the RRC message corresponding to the terminal device may also be sent between the target base station and the terminal device. For example, FIG. 16 shows a method 1600 for transmitting a QoS flow between a secondary base station and a master base station. For content in an example in FIG. 16 that is the same as or similar to that in FIG. 6 to FIG. 5, refer to corresponding content in FIG. 6 to FIG. 15, and details are not described herein again. The method 1600 includes the following steps.

S1601. The secondary base station sends an SN modification requirement message to the master base station.

S1602. The master base station sends an SN modification acknowledgment message to the secondary base station.

S1603. A terminal device receives an RRC connection reconfiguration message from the secondary base station.

S1604. The terminal device sends an RRC connection reconfiguration response message to the secondary base station.

The foregoing describes in detail the communication method in the embodiments of this application with reference to FIG. 1 to FIG. 16. The following describes in detail a base station and a terminal device in the embodiments of this application with reference to FIG. 17 to FIG. 22.

FIG. 17 is a schematic block diagram of a base station 1700 according to an embodiment of this application. It should be understood that the base station 1700 can perform the steps performed by the master base station in the methods in FIG. 1 to FIG. 16. To avoid repetition, details are not described herein again. The base station 1700 includes a processing unit 1701 and a communications unit 1702.

The processing unit 1701 is configured to: send a first request message to a secondary base station by using the communications unit 1702, where the first request message is used to instruct to switch a first QoS flow of a first session from the secondary base station to the master base station, and the first session is a session corresponding to a terminal device; and receive a first response message from the secondary base station by using the communications unit 1702, where the first response message is used to respond to the first request message.

Alternatively, the processing unit 1701 is configured to: send a first request message to a secondary base station by using the communications unit 1702, where the first request message is used to instruct to switch a first QoS flow of a first session from the master base station to the secondary base station, and the first session is a session corresponding to a terminal device; and receive a first response message from the secondary base station by using the communications unit 1702, where the first response message is used to respond to the first request message.

Alternatively, the processing unit 1701 is configured to: receive a first request message from a secondary base station by using the communications unit 1702, where the first request message is used to instruct to switch a first QoS flow of a first session from the secondary base station to the master base station, and the first session is a session corresponding to a terminal device; and send a first response message to the secondary base station by using the communications unit 1702, where the first response message is used to respond to the first request message.

FIG. 18 is a schematic block diagram of a base station 1800 according to an embodiment of this application. It should be understood that the base station 1800 can perform the steps performed by the secondary base station in the methods in FIG. 1 to FIG. 16. To avoid repetition, details are not described herein again. The base station 1800 includes a processing unit 1801 and a communications unit 1802.

The processing unit 1801 is configured to: receive a first request message from a master base station by using the communications unit 1802, where the first request message is used to instruct to switch a first QoS flow of a first session from the secondary base station to the master base station, and the first session is a session corresponding to a terminal device; and send a first response message to the master base station by using the communications unit 1802, where the first response message is used to respond to the first request message.

Alternatively, the processing unit 1801 is configured to: receive a first request message from a master base station by using the communications unit 1802, where the first request message is used to request to switch a first QoS flow of a first session from the master base station to the secondary base station, and the first session is a session corresponding to a terminal device; and send a first response message to the master base station by using the communications unit 1802, where the first response message is used to respond to the first request message.

Alternatively, the processing unit 1801 is configured to: send a first request message to a master base station by using the communications unit 1802, where the first request message is used to instruct to switch a first QoS flow of a first session from the secondary base station to the master base station, and the first session is a session corresponding to a terminal device; and receive a first response message from the master base station by using the communications unit 1802, where the first response message is used to respond to the first request message.

FIG. 19 is a schematic block diagram of a terminal device 1900 according to an embodiment of this application. It should be understood that the terminal device 1900 can perform the steps performed by the terminal device in the methods in FIG. 1 to FIG. 16. To avoid repetition, details are not described herein again. The terminal device 1900 includes a processing unit 1901 and a communications unit 1902.

The processing unit 1901 is configured to receive a first RRC message from a master base station by using the communications unit 1902, where the first RRC message is used to indicate that the first QoS flow of the first session is switched from a secondary base station to the master base station; and send a first RRC response message to the master base station by using the communications unit 1902, where the first RRC response message is used to respond to the first RRC message.

Alternatively, the processing unit 1901 is configured to receive a first RRC message from a master base station by using the communications unit 1902, where the first RRC message is used to indicate that the first QoS flow of the first session is switched from the master base station to a secondary base station; and send a first RRC response message to the master base station by using the communications unit 1902, where the first RRC response message is used to respond to the first RRC message.

Alternatively, the processing unit 1901 is configured to receive a first RRC message from a master base station by using the communications unit 1902, where the first RRC message is used to indicate that the first QoS flow of the first session is switched from a secondary base station to the master base station; and send a first RRC response message to the master base station by using the communications unit 1902, where the first RRC response message is used to respond to the first RRC message

FIG. 20 is a schematic structural diagram of a base station 2000 according to an embodiment of this application. As shown in FIG. 20, the base station 2000 includes one or more processors 2030, one or more memories 2010, and one or more communications interfaces 2020. The processor 2030 is configured to control the communications interface 2020 to receive and send signals, and the memory 2010 is configured to store a computer program. The processor 2030 is configured to invoke the computer program from the memory 2010, and run the computer program, so that the base station performs a corresponding procedure and/or operation performed by a master base station in the embodiments of the communication method in this application. For brevity, details are not described herein again.

It should be noted that the base station 1700 shown in FIG. 17 may be implemented by using the base station 2000 shown in FIG. 20. For example, the communications unit 1702 may be implemented by the communications interface 2020 in FIG. 20, and the processing unit 1701 may be implemented by the processor 2030.

FIG. 21 is a schematic structural diagram of a base station 2100 according to an embodiment of this application. As shown in FIG. 21, the base station 2100 includes one or more processors 2130, one or more memories 2110, and one or more communications interfaces 2120. The processor 2130 is configured to control the communications interface 2120 to receive and send signals, and the memory 2110 is configured to store a computer program. The processor 2130 is configured to invoke the computer program from the memory 2110, and run the computer program, so that the base station performs a corresponding procedure and/or operation performed by a secondary base station in the embodiments of the communication method in this application. For brevity, details are not described herein again.

It should be noted that the base station 1800 shown in FIG. 18 may be implemented by the base station 2100 shown in FIG. 21. For example, the communications unit 1802 may be implemented by the communications interface 2120 in FIG. 21, and the processing unit 1801 may be implemented by the processor 2130.

A person of ordinary skill in the art may be aware that, in combination with the examples described in the embodiments disclosed in this specification, units, algorithms, and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a base station, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this Therefore, the protection scope of this application shall be subject to the protection scope of the claims.

## Claims

1. A communication method, comprising:
sending (610), by a master base station, a first request message to a secondary base station, wherein the first request message is used to instruct to switch a first QoS flow of a first session from the secondary base station to the master base station, and the first session is a session corresponding to a terminal device;
receiving (620), by the master base station, a first response message from the secondary base station, wherein the first response message is used to respond to the first request message;
sending (630), by the master base station, a first RRC message to the terminal device, wherein the first RRC message is used to indicate that the first QoS flow of the first session is switched from the secondary base station to the master base station;
sending, by the master base station, first information to the terminal device, wherein the first information is used to instruct the terminal device to set up, with the master base station, a first bearer corresponding to the first session, a QoS flow corresponding to the first bearer comprises the first QoS flow, and the first information comprises a configuration parameter of the first bearer,
wherein the configuration parameter of the first bearer is the same as a configuration parameter of a second bearer, the second bearer is a bearer that is between the terminal device and the secondary base station and that is in the first session, and a QoS flow corresponding to the second bearer comprises the first QoS flow; and
the method further comprises:
receiving, by the master base station, second information from the secondary base station, wherein the second information comprises the configuration parameter of the second bearer; and
determining, by the master base station, the first information based on the second information, wherein the configuration parameter of the first bearer comprises at least one of the following: a mapping relationship between the first bearer and the QoS flow, and a parameter of the QoS flow comprised by the first bearer.

2. The communication method according to claim 1, wherein the method further comprises:
receiving, by the master base station, first data from the secondary base station, wherein the first data is data that corresponds to the first QoS flow and that is received by the secondary base station from a core network; and
sending, by the master base station, the first data to the terminal device by using the first bearer.

3. The communication method according to claim 2, wherein the receiving, by the master base station, first data from the secondary base station comprises:
receiving, by the master base station, the first data from the secondary base station through a session tunnel.

4. A communication method, comprising:
receiving (630), by a terminal device, a first RRC message from a master base station, wherein the first RRC message is used to indicate that the first QoS flow of the first session is switched from a secondary base station to the master base station; and
sending (640), by the terminal device, a first RRC response message to the master base station, wherein the first RRC response message is used to respond to the first RRC message; and
receiving, by the terminal device, first information from the master base station, wherein the first information is used to instruct the terminal device to set up, with the master base station, a first bearer corresponding to the first session, a QoS flow corresponding to the first bearer comprises the first QoS flow, and the first information comprises a configuration parameter of the first bearer,
wherein the configuration parameter of the first bearer is the same as a configuration parameter of a second bearer, the second bearer is a bearer that is between the terminal device and the secondary base station and that is in the first session, and a QoS flow corresponding to the second bearer comprises the first QoS flow,
wherein the configuration parameter of the first bearer comprises at least one of the following: a mapping relationship between the first bearer and the QoS flow, and a parameter of the QoS flow comprised by the first bearer.

## Patentansprüche

1. Kommunikationsverfahren, das Folgendes umfasst:
Senden (610), durch eine Master-Basisstation, einer ersten Anforderungsnachricht an eine sekundäre Basisstation, wobei die erste Anforderungsnachricht dazu verwendet wird, ein Umschalten eines ersten QoS-Flusses einer ersten Sitzung von der sekundären Basisstation zu der Master-Basisstation anzuweisen, und es sich bei der ersten Sitzung um eine einem Endgerät entsprechende Sitzung handelt;
Empfangen (620), durch die Master-Basisstation, einer ersten Antwortnachricht von der sekundären Basisstation, wobei die erste Antwortnachricht dazu verwendet wird, auf die erste Anforderungsnachricht zu antworten;
Senden (630), durch die Master-Basisstation, einer ersten RRC-Nachricht an das Endgerät, wobei die erste RRC-Nachricht dazu verwendet wird, anzugeben, dass der erste QoS-Fluss der ersten Sitzung von der sekundären Basisstation zu der Master-Basisstation umgeschaltet wird;
Senden, durch die Master-Basisstation, von ersten Informationen an das Endgerät, wobei die ersten Informationen dazu verwendet werden, das Endgerät dazu anzuweisen, mit der Master-Basisstation einen der ersten Sitzung entsprechenden ersten Träger einzurichten, ein dem ersten Träger entsprechender QoS-Fluss den ersten QoS-Fluss umfasst und die ersten Informationen einen Konfigurationsparameter des ersten Trägers umfassen,
wobei der Konfigurationsparameter des ersten Trägers der gleiche wie ein Konfigurationsparameter eines zweiten Trägers ist, der zweite Träger ein Träger ist, der zwischen dem Endgerät und der sekundären Basisstation besteht und der sich in der ersten Sitzung befindet, und ein dem zweiten Träger entsprechender QoS-Fluss den ersten QoS-Fluss umfasst; und
wobei das Verfahren ferner Folgendes umfasst:
Empfangen, durch die Master-Basisstation, von zweiten Informationen von der sekundären Basisstation, wobei die zweiten Informationen den Konfigurationsparameter des zweiten Trägers umfassen; und
Bestimmen, durch die Master-Basisstation, der ersten Informationen basierend auf den zweiten Informationen, wobei der Konfigurationsparameter des ersten Trägers eine Abbildungsbeziehung zwischen dem ersten Träger und dem QoS-Fluss und/oder einen Parameter des QoS-Flusses, der in dem ersten Träger enthalten ist, umfasst.

2. Kommunikationsverfahren nach Anspruch 1, wobei das Verfahren ferner Folgendes umfasst:
Empfangen, durch die Master-Basisstation, von ersten Daten von der sekundären Basisstation, wobei es sich bei den ersten Daten um Daten handelt, die dem ersten QoS-Fluss entsprechen und die durch die sekundäre Basisstation von einem Kernnetz empfangen werden; und
Senden, durch die Master-Basisstation, der ersten Daten an das Endgerät unter Verwendung des ersten Trägers.

3. Kommunikationsverfahren nach Anspruch 2, wobei das Empfangen, durch die Master-Basisstation, von ersten Daten von der sekundären Basisstation Folgendes umfasst:
Empfangen, durch die Master-Basisstation, der ersten Daten von der sekundären Basisstation über einen Sitzungstunnel.

4. Kommunikationsverfahren, das Folgendes umfasst:
Empfangen (630), durch ein Endgerät, einer ersten RRC-Nachricht von einer Master-Basisstation, wobei die erste RRC-Nachricht dazu verwendet wird, anzugeben, dass der erste QoS-Fluss der ersten Sitzung von einer sekundären Basisstation zu der Master-Basisstation umgeschaltet wird; und
Senden (640), durch das Endgerät, einer ersten RRC-Antwortnachricht an die Master-Basisstation, wobei die erste RRC-Antwortnachricht dazu verwendet wird, auf die erste RRC-Nachricht zu antworten; und
Empfangen, durch das Endgerät, von ersten Informationen von der Master-Basisstation, wobei die ersten Informationen dazu verwendet werden, das Endgerät dazu anzuweisen, mit der Master-Basisstation einen der ersten Sitzung entsprechenden ersten Träger einzurichten, ein dem ersten Träger entsprechender QoS-Fluss den ersten QoS-Fluss umfasst und die ersten Informationen einen Konfigurationsparameter des ersten Trägers umfassen,
wobei der Konfigurationsparameter des ersten Trägers der gleiche wie ein Konfigurationsparameter eines zweiten Trägers ist, der zweite Träger ein Träger ist, der zwischen dem Endgerät und der sekundären Basisstation besteht und der sich in der ersten Sitzung befindet, und ein dem zweiten Träger entsprechender QoS-Fluss den ersten QoS-Fluss umfasst,
wobei der Konfigurationsparameter des ersten Trägers eine Abbildungsbeziehung zwischen dem ersten Träger und dem QoS-Fluss und/oder einen Parameter des QoS-Flusses, der in dem ersten Träger enthalten ist, umfasst.

## Revendications

1. Procédé de communication, comprenant :
l'envoi (610), par une station de base maître, d'un premier message de demande à une station de base secondaire, dans lequel le premier message de demande est utilisé pour donner l'instruction de commuter un premier flux de QoS d'une première session de la station de base secondaire à la station de base maître, et la première session est une session correspondant à un dispositif terminal ;
la réception (620), par la station de base maître, d'un premier message de réponse provenant de la station de base secondaire, dans lequel le premier message de réponse est utilisé pour répondre au premier message de demande ;
l'envoi (630), par la station de base maître, d'un premier message de RRC au dispositif terminal, dans lequel le premier message de RRC est utilisé pour indiquer que le premier flux de QoS de la première session est commuté de la station de base secondaire à la station de base maître ;
l'envoi, par la station de base maître, de premières informations au dispositif terminal, dans lequel les premières informations sont utilisées pour donner l'instruction au dispositif terminal de définir, avec la station de base maître, une première porteuse correspondant à la première session, un flux de QoS correspondant à la première porteuse comprend le premier flux de QoS, et les premières informations comprennent un paramètre de configuration de la première porteuse,
dans lequel le paramètre de configuration de la première porteuse est le même qu'un paramètre de configuration d'une seconde porteuse, la seconde porteuse est une porteuse qui se trouve entre le dispositif terminal et la station de base secondaire et qui se trouve dans la première session, et un flux de QoS correspondant à la seconde porteuse comprend le premier flux de QoS ; et
le procédé comprend en outre :
la réception, par la station de base maître, de secondes informations provenant de la station de base maître, dans lequel les secondes informations comprennent le paramètre de configuration de la seconde porteuse ; et
la détermination, par la station de base maître, des premières informations sur la base des secondes informations, dans lequel le paramètre de configuration de la première porteuse comprend au moins l'un des éléments suivants : une relation de mappage entre la première porteuse et le flux de QoS, et un paramètre du flux de QoS compris par la première porteuse.

2. Procédé de communication selon la revendication 1, dans lequel le procédé comprend en outre :
la réception, par la station de base maître, de premières données provenant de la station de base secondaire, dans lequel les premières données sont des données qui correspondent au premier flux de QoS et qui sont reçues par la station de base secondaire depuis un réseau central ; et
l'envoi, par la station de base maître, des premières données au premier dispositif terminal au moyen de la première porteuse.

3. Procédé de communication selon la revendication 2, dans lequel la réception, par la station de base maître, de premières données provenant de la station de base secondaire comprend :
la réception, par la station de base maître, des premières données provenant de la station de base secondaire par l'intermédiaire d'un tunnel de session.

4. Procédé de communication, comprenant :
la réception (630), par un dispositif terminal, d'un premier message de RRC provenant d'une station de base maître, dans lequel le premier message de RRC est utilisé pour indiquer que le premier flux de QoS de la première session est commuté de la station de base secondaire à la station de base maître ;
l'envoi (640), par le dispositif terminal, d'un premier message de réponse de RRC à la station de base maître, dans lequel le premier message de réponse de RRC est utilisé pour répondre au premier message de RRC ; et
la réception, par le dispositif terminal, de premières informations provenant de la station de base maître, dans lequel les premières informations sont utilisées pour donner l'instruction au dispositif terminal de définir, avec la station de base maître, une première porteuse correspondant à la première session, un flux de QoS correspondant à la première porteuse comprend le premier flux de QoS, et les premières informations comprennent un paramètre de configuration de la première porteuse,
dans lequel le paramètre de configuration de la première porteuse est le même qu'un paramètre de configuration d'une seconde porteuse, la seconde porteuse est une porteuse qui se trouve entre le dispositif terminal et la station de base secondaire et qui se trouve dans la première session, et un flux de QoS correspondant à la seconde porteuse comprend le premier flux de QoS,
dans lequel le paramètre de configuration de la première porteuse comprend au moins l'un des éléments suivants : une relation de mappage entre la première porteuse et le flux de QoS, et un paramètre du flux de QoS compris par la première porteuse.
